# EUROPEAN PATENT SPECIFICATION

(11) **EP 2 485 310 B1**
(45) Date of publication and mention of the grant of the patent: **19.07.2017**
(21) Application number: 10818928.3
(22) Date of filing: 28.09.2010
(51) Int. Cl.: H01M 8/04089, H01M 8/0432, H01M 8/04746, H01M 8/04858

(54) **FUEL CELL DEVICE**
BRENNSTOFFZELLENELEMENT
DISPOSITIF DE PILE À COMBUSTIBLE

(30) Priority: 28.09.2009 JP 2009221860; 28.10.2009 JP 2009247307
(43) Date of publication of application: 08.08.2012
(73) Proprietor: Kyocera Corporation, Kyoto-shi, Kyoto 612-8501 (JP)
(72) Inventor: ONO, Takashi, Kirishima-shi Kagoshima 899-4312 (JP); NAKAMURA, Mitsuhiro, Kirishima-shi Kagoshima 899-4312 (JP); TAKAHASHI, Naruto, Kirishima-shi Kagoshima 899-4312 (JP)
(74) Representative: Viering, Jentschura & Partner mbB Patent- und Rechtsanwälte
(86) International application number: PCT/JP2010/066838
(87) International publication number: WO 2011/037258

(56) References cited:
- JP-A- H07 161 371
- JP-A- 2005 149 914
- JP-A- 2006 196 192
- JP-A- 2006 302 881
- JP-A- 2008 077 940
- JP-A- 2008 210 626
- JP-A- 2008 226 704
- JP-A- 2009 193 808
- US-A1- 2006 216 556

## Description

### TECHNICAL FIELD

The present invention relates to a fuel cell device according to the pre-characterizing part of claim 1

### BACKGROUND ART

In recent years, various fuel cell modules including cell stacks arranged inside a housing container and various fuel cell devices including the fuel cell module inside an exterior case have been proposed as forms of next-generation energy (for example, refer to patent document 1). The cell stacks each include a plurality of fuel cells that are capable of generating power using fuel gas (hydrogen-containing gas) and air (oxygen-containing gas).

In such fuel cell devices, for example, the oxygen-containing gas and the fuel gas are supplied appropriately to the fuel cells in compliance with the demands from external loads such as refrigerator, and the like, and electric power is generated in response to the demands from the external loads.

### RELATED ART

Patent Document 1: Japanese Unexamined Patent Application Publication No. 2007-59377

A fuel cell device according to the pre-charactarizing part of claim one has been known from the Japanese patent application JP H07 161371 A. Another fuel cell device measuring the temperature and controlling the oxygen - containing gas supplied to the fuel cell based on the temperature is known from the Japanese patent application JP 2005 149914 A.

It is an object of the invention to improve the fuel cell device according to the pre-characterizing part of claim 1 and a method according to the pre-characterizing part of claim 8 of operating such fuel cell device for increasing efficiency and durability of the fuel cell device. This and other objects are achieved by the features in the characterizing part of claims 1 and 8 in combination with the pre-characterizing part of these claims. Advantageous further embodiments are claimed in the dependent claims.

### SUMMARY OF THE INVENTION

### PROBLEMS TO BE SOLVED BY THE INVENTION

During an operation of the fuel cell device, ambient temperature of the fuel cell modules and/or the cell stacks may vary with a change in temperature of oxygen-including gas such as air and the like that are supplied to the fuel cells. Therefore, during an operation of the fuel cell device, if the relationship between a rate of air utilization (Ua) and an amount of current (I) of the cell stack is maintained constant through out the operation of the fuel cell device, there is a concern that the operation temperature of the cell stack may vary and cause difficulties to have an efficient operation and/or that durability of the cell stack may be dropped.

Therefore, the purpose of the present invention is to provide a fuel cell device with improved durability.

### MEANS FOR SOLVING THE PROBLEMS

The present invention is defined in appended claims 1 and 8. According to the present invention, a fuel cell device comprises: a cell stack stored inside a module-housing container, and comprising a plurality of fuel cells arranged for conducting electric power generation with fuel gas and oxygen-containing gas; an oxygen-containing gas supply unit operable to supply oxygen-containing gas from outside of the module-housing container to the fuel cells of the module-housing container; a supplying-power conditioning unit operable to adjust the quantity of generated electric power in the cell stack; a thermal sensor outside the module-housing container, operable to measure the temperature of the oxygen-containing gas supplied to the fuel cell; and a control unit to control both the oxygen-containing gas supply unit and the supplying-power conditioning unit. The control unit controls such that increase an amount of oxygen-containing gas supplied from the oxygen-containing gas supply unit if the temperature of the oxygen-containing gas measured by the thermal sensor is higher than the predetermined temperature.

### ADVANTAGES OF THE INVENTION

In a fuel cell device according the present invention, if the temperature of oxygen-containing gas supplied to a fuel cell inside a module-housing container from outside the module-housing container is higher than a predetermined temperature, a control unit controls such that the amount of oxygen-containing gas supplied from the oxygen-containing gas supply unit increases; as a result, more oxygen-containing gas such as air and the like is supplied to a cell stack, thereby, lowering the temperature increase of the cell stack. Consequently, a fuel cell device with increased durability may be achieved.

### BRIEF DESCRIPTION OF THE DRAWINGS

Figure 1 is a configuration diagram illustrating an example of a fuel cell device including a fuel cell system.
Figure 2 is an illustration of a perspective view of an example of a fuel cell module including a fuel cell device.
Figure 3 is an illustration of a schematic view of a fuel cell device with a partial omission.
Figure 4 is an illustration of an exploded perspective view of a fuel cell device with a partial omission.
Figure 5 is a graph illustrating an example of a relationship between a rate of air utilization of a cell stack and an amount of current generated by the cell stack in compliance with the demands from the external load during an operation of a fuel cell device.

### EMBODIMENTS OF THE INVENTION

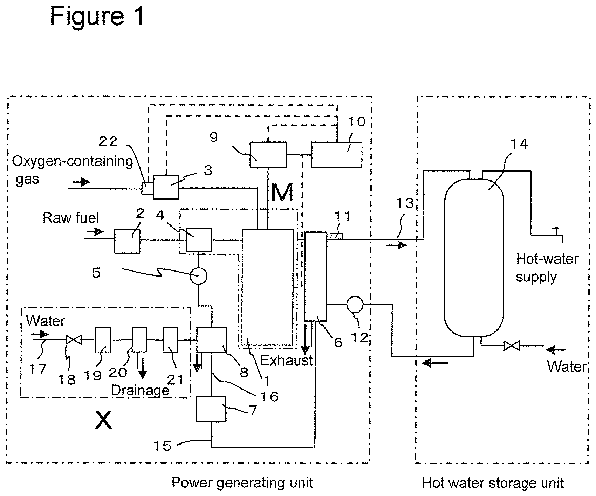

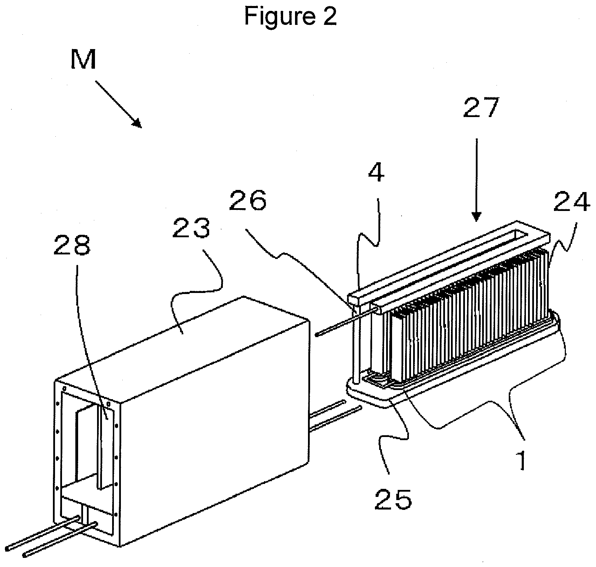

Figure 1 is a configuration diagram illustrating an example of a fuel cell system including a fuel cell device. Figure 2 is an illustration of a perspective exterior view of an example of a fuel cell device including a fuel cell device. The same reference numerals are used to the same members in the following figures.

The fuel cell system illustrated in Figure 1 includes a power generating unit to generate power, a hot water storage unit to store hot water after heat exchange, and a circulation pipeline to circulate water among these units. The power generating unit corresponds to a fuel cell device that includes an exterior case and various devices and units described below in the exterior case. First of all, various devices and units constituting the fuel cell device are described.

The fuel cell device illustrated in Figure 1 includes: a cell stack 1 including a plurality of fuel cells arranged (no shown); a raw fuel supply unit 2 to supply raw fuel such as a natural gas and the like; an oxygen-containing gas supply unit 3 to supply oxygen-containing gas to the fuel cells constituting the cell stack 1; and a reformer 4 that carries out a steam-reforming reaction from the raw fuel and steam.

The reformer 4 includes: a vaporizing unit (no shown) to vaporize pure water supplied from a water pump 5 mentioned later and to mix the raw fuel supplied by the raw fuel supply unit 2 with the steam; and a reforming unit (no shown) including catalyst therein to generate a fuel gas by reacting the mixed raw fuel with the steam. Thereby, the electric power is generated in the fuel cells with the fuel gas generated at the reformer 4 and the oxygen-containing gas supplied from the oxygen-containing gas supplying unit 3.

In Figure 1, configured is a fuel cell module (hereinafter, may be abbreviated as module) that constitutes the fuel cell device by storing a cell stack 1 and a reformer 4 in a module-housing container. In Figure 1, respective devices, and the like constituting the fuel cell module are illustrated by surrounding them with a two-dot chain line (shown as M in Figure 1).

Here, the module M is described with using Figure 2. Known fuel cell modules may be used for the module M. For example, the module M is configured by containing a cell stack unit 27 and a reformer 4 in a module-housing container 23 (hereinafter, may be simply called a housing container).

The cell stack unit 27 is configured by fixing a bottom end of a fuel cell 24 configuring the cell stack 1 on a manifold 25 with insulating bonding materials such as a glass sealing material and the like. The column-like fuel cells 24 are vertically arranged in the cell stack 1 with a gas passage in which a gas passes inside longitudinally and is configured so as to be electrically connected in series between adjacent fuel cells 24 through a power collecting member.

The reformer 4 is arranged above the fuel cell 24 to generate fuel gas by reforming raw fuel such as natural gas, kerosene and the like, and to supply the fuel gas to the fuel cells 24. The fuel gas generated at the reformer 4 is supplied to the manifold 25 via a gas flow tube 26 and is supplied to the gas passage provided in the fuel cell 24 via the manifold 25.

Various fuel cells are known as fuel cells constituting the cell stack 1; however, in conducting a partial load operation (load follow operation), solid oxide fuel cells is preferably selected. In addition to the fuel cells 24, auxiliary devices necessary for the operation of fuel cells 24 may be downsized by selecting solid oxide fuel cells as the fuel cells constituting the cell stack 1, allowing the fuel cell device to be downsized.

Regarding the shape of fuel cells 24, fuel cells 24 with various shapes may be used; however, upon efficiently generating electric power at fuel cells 24, a hollow flat fuel cell 24 may be selected. Fuel electrode-supporting type of hollow flat fuel cells 24 with a fuel electrode layer formed to the inside and an oxygen electrode layer formed to the outside may be used as such hollow flat fuel cells 24.

Figure 2 illustrates a state in which part of a housing container 23 (anteroposterior wall) is removed and the cell stack unit 27 and the reformer 4 which are stored inside are extracted backwards. Here, in the module M illustrated in Figure 2, the cell stack unit 27 may be slid and stored inside the housing container 23. The cell stack unit 27 may be considered such that the cell stack unit 27 contains the reformer 4.

A oxygen-containing gas introduction member 28 is provided inside the housing container 23, which is arranged between the cell stacks 1 juxtaposed on the manifold 25 in Figure 2. The oxygen-containing gas introduction member 28 supplies oxygen-containing gas to the bottom end of the fuel cell 24 such that the oxygen-containing gas flows from the bottom end to the top end of the lateral side of the fuel cell 24 together with the flow of the fuel gas.

The temperature of the fuel cell 24 may be increased by combusting the fuel gas provided from the gas passage of the fuel cell 24 and the oxygen-containing gas at the upper end of the fuel cell 24, accelerating activation of the cell stack unit 27. By combusting the fuel gas discharged from the gas passage of the fuel cell 24 and the oxygen-containing gas at the upper end of the fuel cell 24, the reformer 4 arranged on top of the fuel cell 24 may be heated. Consequently, a reforming reaction may be efficiently conducted at the reformer 4.

The fuel cell device illustrated in Figure 1, a heat exchanger 6 that exchanges heat with an exhaust gas produced from the generation of electric power at fuel cells constituting the cell stack 1 and water flowing through a circulation pipeline 13, a condensed water purifier 7 to purify (preferably generates pure water) the condensed water generated from heat exchange, and a condensed water feeding tube 15 to supply the condensed water generated at the heat exchanger 6 to the condensed water purifier 7 are formed. The condensed water processed at the condensed water purifier 7 is stored in a water tank 8 connected by a tank-connecting pipe 16 and subsequently supplied to the reformer 4 by the water pump 5. The water tank 8 may be omitted by having the condensed water purifier 7 that functions as a water tank.

In the fuel cell device illustrated in Figure 1, the power generating unit includes a supplying-power conditioning unit 9 operable to adjust the quantity of electric power generated at the cell stack 1 in compliance with a demand from an external load and to convert the direct-current power generated at the cell stack 1 to alternating-current power; an outlet water temperature sensor 11 located at the outlet of the heat exchanger 6 in order to measure the water temperature of the water flowing through the outlet of the heat exchanger 6; a thermal sensor 22 located on exterior of the housing container 23 in order to measure the temperature of the power generating unit (inside the exterior case); and a control unit 10. Together with a circulating pump 12 that circulates water inside a circulation pipeline 13, a power generating unit is configured.

Connection between a supplying-power conditioning unit 9 and the external load is omitted in Figure 1, and a power conditioner may be exhibited as an example of the supplying-power conditioning unit 9. Consequently, installing the fuel cell devices, carrying the fuel cell devices, and the like, may be simplified by housing each of these devices that constitutes the power generating unit inside the exterior case. The hot water storage unit is constituted by including a hot water storage tank 14 to store hot water after heat exchange.

Pollution-abatement equipment for exhaust gas (no shown), which processes the exhaust gas with the operation of the cell stack 1, is provided between the cell stack 1 and the heat exchanger 6. In the pollution abatement equipment for exhaust gas, an exhaust gas processing unit is inside the housing container and a known combustion catalyst may be used as the exhaust gas processing unit.

Meanwhile, if an amount of condensed water supplied to the condensed water purifier 7 is small and/or if the condensed water processed at the condensed water processing unit is of low purity, water supplied from the outside may be purified and supplied to the reformer 4. In Figure 1, various water processing units to purify water supplied from the outside are equipped.

Here, each water processing unit for supplying the water supplied from the outside to the reformer 4 includes at least an ion-exchange resin unit 21 among an activated charcoal filtering device 19, a reverse osmosis unit 20, and the ion-exchange resin unit 21 (preferably all apparatuses). Then, the pure water generated at the ion-exchange resin unit 21 is stored in the water tank 8. The fuel cell device illustrated in Figure 1 includes a feed valve 18 to adjust the amount of water supplied from the outside.

Each of water processing units to process the water supplied to the reformer 4 into pure water is indicated by surrounding the water processing units with a dashed line (indicated as external water purification equipment X).

If the condensed water necessary for the steam-reforming reaction at the reformer 4 is maintained by the condensed water alone generated from heat exchange between the exhaust gas produced by the power generation at the fuel cells and the water, the external water purification equipment X may be omitted.

Here, the operation method of the fuel cell device illustrated in Figure 1 is described. When carrying out steam reforming in order to produce the fuel gas used for power generation at fuel cells, the condensed water produced by heat exchange between the exhaust gas produced by the operation of the fuel cells and the water flowing inside the circulation pipeline 13 at the heat exchanger 6, is used as the pure water used in the reformer 4.

The water flows inside the circulation pipeline 13 to increase water temperature due to heat exchange with the exhaust gas (that is to say, hot water), and then is stored in the hot water storage tank 14. The condensed water produced at the heat exchanger 6 flows inside a condensed water supplying pipe 15 and is supplied to the condensed water purifier 7. The condensed water processed at the condensed water purifier, which is included in the condensed water purifier 7, is supplied to the water tank 8 through a tank connecting pipe 16. The water stored in the water tank 8 is supplied to the reformer 4 by the water pump 5, steam reforming is carried out with the water and the raw fuel supplied from the raw fuel supply unit 2, and the produced fuel gas is supplied to the fuel cells. Electric power is generated in the fuel cells with using the fuel gas supplied via the reformer 4 and the oxygen-containing gas supplied from the oxygen-containing gas supplying unit 3, and an electrical power generated at the fuel cells is supplied to the external load via the supplying-power conditioning unit 9. Due to the methods mentioned above, autonomous water operation may be carried out by efficiently making use of the condensed water.

On the other hand, if little condensed water is produced or if the condensed water processed at the condensed water purifier 7 is of low purity, the water supplied from the outside may also be used.

In such cases, first, for example, the feed valve 18 such as solenoid valve, air-driving valve, or the like, opens and the water supplied from the outside, such as tap water or the like, is supplied to the activated charcoal filter 19 via a water pipe 17. The water processed at the activated charcoal filter 19 is then supplied to a reverse osmosis membrane 20. The water processed at the reverse osmosis membrane 20 is subsequently supplied to the ion-exchange resin unit 21. Then, the water purified at the ion-exchange resin unit 21 is stored in the water tank 8. The purified water stored in the water tank 8 is used for generating electric power at the fuel cells by the method mentioned above.

In fuel cell devices having a configuration such as those mentioned above, the controller 10 controls the operation of the raw fuel supply unit 2 and the oxygen-containing gas supplying unit 3 during the rated operation to supply the amount of fuel gas and oxygen-containing gas necessary for rated operation to the fuel cells. Thereby, a rated power is generated in the fuel cells and at the same time direct current flows in the fuel cells. The electric power generated by the electrical generation at the fuel cells is supplied to the external load after being converted to alternating-current power at the supplying-power conditioning unit 9.

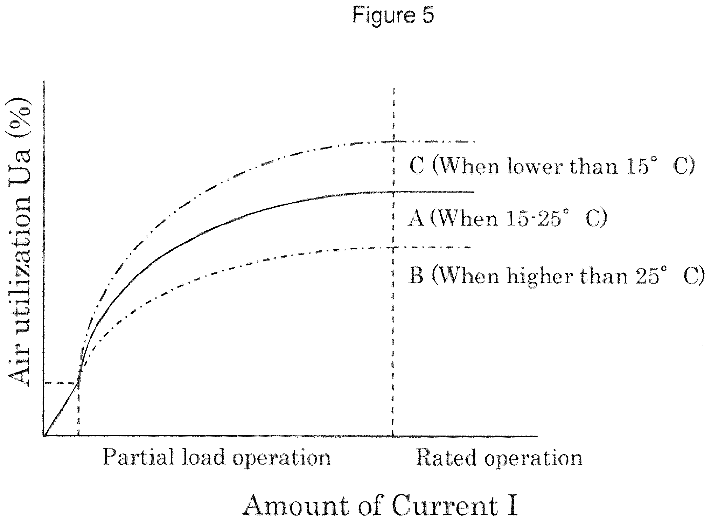

That is, as illustrated in Figure 5, the controller 10 controls each unit during the rated operation such that the relationship between a rate of air utilization (Ua) of the cell stack 1 and the amount of current (I) generated by the cell stack 1 becomes a constant rate in response to the demands from the external load. In other words, the controller 10 controls each unit such that the rate of air utilization (Ua) is constant even if the amount of current (I) varies in some degree.

Meanwhile, when using the fuel cell device for household purposes, the required power of the external load is prone to fluctuate. The required power is higher particularly in the early morning time and evening-onwards time, causing a rated operation because the fuel cells preferably generate high power. On the other hand, the fuel cells preferably generate low power because the required power is low in the day time or at midnight.

Having the fuel cell device carry out the rated operation in a time zone with low required power may cause a reverse power flow of the electricity from the fuel cell device to the system power connected to the fuel cell device. Therefore, particularly in the operation of the fuel cell device for household purposes, the partial load operation (load following operation) corresponding to the required power of the external load may be carried out. In other words, the operation may preferably change the amount of power generated in response to the required power of the external load.

During such a partial load operation, the controller 10 controls the operations of the raw fuel supply unit 2 and the oxygen-containing gas supplying unit 3 to supply the amount of fuel gas and oxygen-containing gas necessary for obtaining an amount of power corresponding to the required power of the external load to the fuel cell. The direct-current power resulting from the generation of electric power by the fuel cells is converted to alternating-current power at the supplying-power conditioning unit 9 and subsequently supplied to the external load. That is, the rate of air utilization (Ua) and the amount of current (I) of the cell stack 1 fluctuates in response to the required load during partial load operation (the rate of air utilization (Ua) decreases compared to the rated operation).

During rated operation of the fuel cell system, efficient operation may be conducted by maintaining a constant relationship between a rate of air utilization (Ua) and an amount of current (I). During partial load operation of the fuel cell system, a rate of air utilization and an amount of current also fluctuate in response to the fluctuation in external load; however, in such cases as well, efficient operation may be conducted by establishing a relationship between the rate of air utilization (Ua) and the amount of current (I) of the cell stack in advance.

In an operation of the fuel cell device, there may be cases in which the temperature of fuel cell module and/or the surrounding temperature of the cell stack change in response to a temperature change of the oxygen-containing gas (air) supplied to the fuel cells. Therefore, during an operation of the fuel cell device, when operation is conducted while maintaining a constant relationship between the rate of air utilization (Ua) and amount of current (I), there is a concern of the operating temperature of the fuel cell fluctuating, making it difficult to conduct efficient operation and/or a concern of declined durability of the cell stack.

Therefore, in the present embodiments, the relationship between the rate of air utilization (Ua) and amount of current (I) is fluctuated based on the temperature of oxygen-containing gas supplied to the cell.

Regarding the oxygen-containing gas supplied to the fuel cell in the fuel cell device, the oxygen-containing gas taken in from outside the module-housing container 23 is supplied. Therefore, the relationship between the rate of air utilization (Ua) and the amount of current (I) may be fluctuated based on the ambient temperature outside the exterior case in which the housing container 23 is stored. Meanwhile, if a thermocouple and the like to measure the ambient temperature is located on the outer surface of the exterior case, damage caused by shock may be a concern. In addition, if the fuel cell device is located adjacent to houses, there is another concern in which influence from radiant heat and the like of walls of the houses and/or the fuel cell device may cause an error in the measured ambient temperature. Therefore, it is preferable to measure the temperature of the oxygen-containing gas outside the housing container 23 and inside the exterior case, control the quantity of the supplied oxygen-containing gas based on the temperature of the oxygen-containing gas inside the exterior case, and adjust the relationship between the rate of air utilization (Ua) and amount of current (I).

In a fuel cell device according to the present embodiment, the operation of the oxygen-containing gas supply unit 3 is controlled such that the rate of air utilization (Ua) in the cell stack 1 with respect to the quantity of generated electric power of the cell stack 1 adjusted by the supplying-power conditioning unit 9 is fluctuated based on the temperature of the oxygen-containing gas measured by the thermal sensor outside the housing container 23.

When measuring the temperature of the oxygen-containing gas outside the housing container 23, there are cases in which the thermal sensor 22 to measure the temperature inside the exterior case (temperature of oxygen-containing gas inside the exterior case) is arranged inside the exterior case together with controlling the oxygen-containing gas supply unit 3 based on the temperature inside the exterior case measured by the thermal sensor 22. Alternatively, there are cases in which the thermal sensor is arranged outside the exterior case and the oxygen-containing gas supply unit 3 is controlled based on the ambient temperature outside the exterior case.

A fuel cell device is generally configured such that the oxygen-containing gas inside the exterior case is sucked in and supplied to the fuel cells; therefore, the temperature of the oxygen-containing gas measured by the thermal sensor 22 located inside the exterior case is closer to the temperature of oxygen-containing gas supplied to the cell than the ambient temperature measured by the thermal sensor located outside the exterior case. Consequently, it is preferable to control the oxygen-containing gas supply unit 3 based on the temperature of the oxygen-containing gas measured by the thermal sensor 22 located inside the exterior case. Described below is a case in which the thermal sensor 22 is located outside the housing container 23 and inside the exterior case and the oxygen-containing gas supply unit 3 is controlled by the temperature inside the exterior case measured by the thermal sensor 22.

In the fuel cell device according to the present embodiment, the thermal sensor 22 that measures the temperature inside the exterior case (temperature of oxygen-containing gas inside the exterior case) is located inside the exterior case, and in addition, the operation of the oxygen-containing gas supply unit 3 is controlled so as to fluctuate the rate of air utilization (Ua) with respect to the quantity of generated electric power of the cell stack 1 adjusted by the supplying-power conditioning unit 9 based on the temperature inside the exterior case measured by the thermal sensor 22.

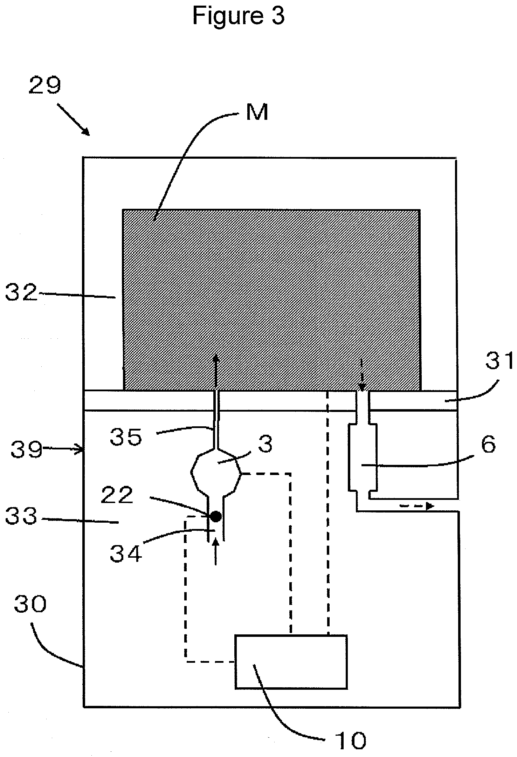

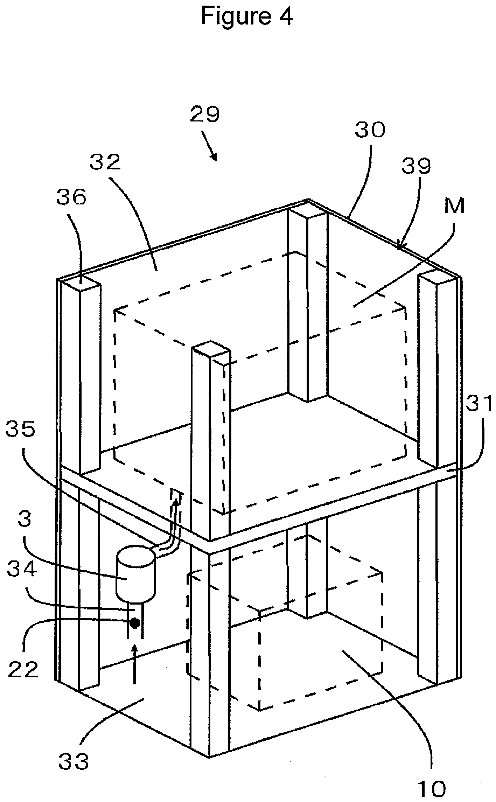

Figure 3 is a schematic diagram illustrating a fuel cell device according to the present embodiment without a part of apparatuses inside of the fuel cell device omitted. Figure 4 is an exploded perspective view illustrating a fuel cell device according to the present embodiment without a part of apparatuses inside of the fuel cell device omitted. In Figure 3, the dotted line indicates the main signal path transferred to the control unit 10 or the main signal path transferred from the control unit 10. The arrow indicates the flow of the oxygen-containing gas such as air and the dotted line arrow indicates the flow of the exhaust oxygen-containing gas generated along with the operation of module M.

In the fuel cell device 29 illustrated in Figures 3 and 4, the inside of the exterior case 39, which is comprised of supporting pillars 36 and outer casing plates 30, is sectioned into a top section and a bottom section by a partition plate 31. The upper section is a module storing room 32 that stores the above-mentioned module M while the bottom section is configured as an auxiliary storage room 33 that stores auxiliaries to operate the module M. In Figure 3, the oxygen-containing gas supply unit 3, the heat exchanger 6 and the control unit 10 are shown as auxiliaries stored in the auxiliary storage room 33, while other auxiliaries are omitted. In Figure 4, the heat exchanger 6 among the auxiliaries shown in Figure 3 is further omitted.

In the oxygen-containing gas supply unit 3 illustrated in Figures 3 and 4, the oxygen-containing gas inside the exterior case 39 is used as the oxygen-containing gas to be supplied to the cell, and includes: an gas inlet 34 to take in the oxygen-containing gas inside the exterior case 39; and an gas outlet 35 to send the oxygen-containing gas taken in at the gas inlet 34 to the fuel cell. An end of the gas inlet 34 may be arranged such that it connects to the exterior of the exterior case 39 so that it directly takes in open air outside the exterior case 39. In such cases, open air is directly supplied to the fuel cell 24.

The thermal sensor 22 preferably measures the temperature of the oxygen-containing gas closest to the fuel cell 24 among the temperatures of the oxygen-containing gas supplied to the fuel cell 24. Therefore, the thermal sensor 22 is preferably arranged inside the gas inlet 34 or inside the gas outlet 35 of the oxygen-containing gas supply unit 3. In the fuel cell device 29 illustrated in Figures 3 and 4, the thermal sensor 22 is located inside the gas inlet 34 of the oxygen-containing gas supply unit 3 as an example. Consequently, the temperature of the oxygen-containing gas supplied to the fuel cell 24 may be measured more precisely. The thermal sensor 22 may be located both inside the gas inlet 34 and inside the gas outlet 35.

In the fuel cell device 29 according to the present embodiment, the operation of the oxygen-containing gas supply unit 3 is controlled based on the temperature inside the exterior case (preferably the gas inlet 34 or the gas outlet 35) measured by the thermal sensor 22 such that the rate of air utilization (Ua) in the cell stack 1 with respect to the quantity of generated electric power of the cell stack 1 adjusted by the supplying-power conditioning unit 9 is fluctuated. The control of the oxygen-containing gas supply unit 3 is described below.

Figure 5 is a graph showing an example of the relationship between a rate of air utilization (Ua) and an amount of current (I) of the cell stack 1 during the operation of the fuel cell device according to the present embodiment.

The solid line A in the Figure is a graph showing a relationship between a rate of air utilization (Ua) and an amount of current (I) of the cell stack 1 if the temperature of the oxygen-containing gas supplied to the fuel cell 24 (the temperature of oxygen-containing gas between the housing container 23 and the exterior case 39; may be abbreviated hereinafter as the temperature inside the exterior case) is within the range of a predetermined temperature. The dashed line B in the Figure is a graph showing a relationship between a rate of air utilization (Ua) and an amount of current (I) of the cell stack 1 if the temperature of the oxygen-containing gas supplied to the fuel cell 24 (the temperature inside the exterior case 39) is higher than the predetermined temperature. The two-dot chain line C in the Figure is a graph showing a relationship between a rate of air utilization (Ua) and an amount of current (I) of the cell stack 1 if the temperature inside the exterior case is lower than the predetermined temperature. The region (left end) in which the relationship between the rate of air utilization (Ua) and amount of current (I) is constant regarding the respective graphs is the region in which the minimum flow of oxygen-containing gas is supplied to the cell stack 1.

During operation of the fuel cell device, when conducting partial load operation or rated operation, the most efficient operation is preferably conducted based on the power generation efficiency of the cell stack 1, the temperature of the cell stack 1, the temperature inside the module M, and the like; therefore, the best relational expression between the rate of air utilization (Ua) and the amount of current (I) is preferably established in advance. An example of this relational expression is indicated in graph A. Graph A shows a graph in which the temperature is constant within the range of the predetermined temperature, and for example, the temperature inside the exterior case 39 is constant within a range of 15 to 25°C.

If the temperature of the oxygen-containing gas supplied to the fuel cell is high or low, the surrounding temperature of the module M and/or the cell stack 1 may change in response to the change in temperature of the oxygen-containing gas supplied to the fuel cell 24. Therefore, if the operation is conducted while maintaining the constant relationship between the rate of air utilization (Ua) and the amount of current (I) of the cell stack 1 (operation of graph A alone) during the operation of the fuel cell device, the operating temperature of the cell stack 1 fluctuates, resulting in a concern of difficulty in conducting an efficient operation and of low durability of the cell stack 1.

Therefore, in a fuel cell device according to the present embodiment, based on the temperature of the oxygen-containing gas inside the exterior case 39 measured by the thermal sensor 22, the control unit 10 controls the oxygen-containing gas supply unit 3 so as to fluctuate the rate of air utilization (Ua) in the cell stack 1 with respect to the quantity of generated electric power of the cell stack 1 adjusted by the supplying-power conditioning unit 9. Consequently, the effect of the temperature of oxygen-containing gas supplied to the fuel cell may be made smaller and the power generation efficiency and/or the durability of the cell stack 1 may be improved.

Specifically, if the temperature of the oxygen-containing gas inside the exterior case 39 is higher than the predetermined temperature (for example, if higher than 25°C), there is a concern of increase in the temperature of the cell stack 1, and of the decreased durability. Therefore, in such cases, in the control unit 10, the oxygen-containing gas supply unit 3 is preferably controlled such that the rate of air utilization in the cell stack 1 decreases with respect to the rate of air utilization in the cell stack 1 with respect to the quantity of generated electric power of the cell stack 1 adjusted by the supplying-power conditioning unit 9, which is established in advance when the temperature of the oxygen-containing gas supplied to the fuel cell 24 is within the predetermined temperature. In Figure 5, this condition is shown in graph B.

To control so as to reduce a rate of air utilization implies that, when described using the graph in Figure 5, the rate of air utilization is decreased with respect to the rate of air utilization (Ua) (indicated in graph A) in a given quantity of generated electric power (I) of the cell stack 1 if the temperature of the oxygen-containing gas supplied to the fuel cell 24 (the temperature inside the exterior case 39) is within the predetermined temperature range (for example, 15 to 25°C). The predetermined temperature range of the oxygen-containing gas supplied to the fuel cell 24 may be, for example, 15 to 25°C as mentioned above, or may be a single temperature, for example, 20°C. The predetermined temperature range may be set up based on the location at which the thermal sensor 22 is located.

As a result, if the temperature inside the exterior case 39 is higher than the predetermined temperature, more oxygen-containing gas is supplied to the cell stack 1, and the temperature increase of the cell stack 1 may be reduced. Consequently, a fuel cell device with improved durability may be achieved.

On the other hand, if the temperature inside the exterior case 39 is lower than the predetermined temperature (for example, lower than 15°C), the temperature of the cell stack 1 declines and there is a concern of the power generation performance of the cell stack 1 declining.

Therefore, in such a case, the control unit 10 preferably controls the oxygen-containing gas supply unit 3 such that the rate of air utilization (Ua) in the cell stack 1 increases with respect to the rate of air utilization (Ua) in the cell stack 1 with respect to the quantity of generated electric power of the cell stack 1 adjusted by the supplying-power conditioning unit 9 established in advance for cases when the temperature inside the exterior case 39 is within the predetermined temperature range (for example, 15 to 25°C). In Figure 5, this condition is shown in graph C.

To control so as to increase the rate of air utilization (Ua) implies that, when described using the graph of Figure 5, the rate of air utilization (Ua) is increasing with respect to the rate of air utilization (Ua) (shown in graph A) in a given quantity of generated electric power (I) of the cell stack 1 for a case in which the temperature inside the exterior case 39 is within the predetermined temperature range (for example, 15 to 25°C).

Consequently, if the temperature inside the exterior case 39 is lower than the predetermined temperature, less oxygen-containing gas is supplied to the cell stack 1, and a reduction in the temperature of the cell stack 1 may be smaller.

If the temperature inside the exterior case 39 is lower than the predetermined temperature (when low temperature), the voltage of the cell stack 1 declines in response to the decline in the power generation performance, electric power increases upon a demand from the external load, and there is a concern of the durability of the cell stack 1 declining due to a large current flow.

However, if the temperature inside the exterior case 39 is lower than the predetermined temperature, the reduction in the temperature of the cell stack 1 may be controlled by controlling the oxygen-containing gas supply unit 3 such that the rate of air utilization (Ua) in the cell stack 1 increases. Consequently, a fuel cell device with improved power generation efficiency and improved durability may be achieved.

The relational expression between the amount of current (I) and the rate of air utilization (Ua) for the cell stack 1 may be appropriately set up based on the rated power output of the cell stack 1 and volume of the module M, and the like.

The relationship between the rate of air utilization (Ua) and the amount of current (I) of the cell stack 1 is not restricted to the specific relationship described above. For example, during the partial load operation or rated operation, if the temperature of the oxygen-containing gas supplied to the fuel cell 24 is shifted to a temperature higher or lower than the predetermined temperature range than the predetermined temperature range from a temperature within the predetermined temperature range, and/or if the temperature of the oxygen-containing gas supplied to the fuel cell 24 is shifted to a temperature within the predetermined temperature range from a temperature higher or lower than the predetermined temperature range, the relationship between the rate of air utilization (Ua) and the amount of current (I) may be changed in response to the temperature change thereof.

For example, if the temperature of the oxygen-containing gas supplied to the fuel cell 24 is within the predetermined temperature range, the control unit 10 may control the oxygen-containing gas supply unit 3 such that the relational expression shown in graph A is achieved. If the temperature inside the exterior case 39 becomes higher than the predetermined temperature during the partial load operation or the rated operation, the control unit 10 may also control the oxygen-containing gas supply unit 3 such that the relational expression shown in graph B is achieved.

In the same manner, if the temperature inside the exterior case 39 is within the predetermined temperature range, the control unit 10 may control the oxygen-containing gas supply unit 3 such that the relational expression shown in graph A is achieved. If the temperature inside the exterior case 39 becomes lower than the predetermined temperature during the partial load operation, the control unit 10 may control the oxygen-containing gas supply unit 3 such that the relational expression shown in graph C is achieved.

Based on the temperature inside the exterior case 39, the control unit 10 may control the oxygen-containing gas supply unit 3 such that the relational expression becomes the relational expression shown in graph A from the relational expression shown in graph B or C, and also such that changes among the relational expressions are repeatedly controlled. In other words, the rate of air utilization (Ua) in the cell stack 1 may have 2 variable functions f(i, t) of an amount of current (I) in the cell stack 1 and the temperature (t). Therefore, for example, if the temperature inside the exterior case 39 is higher than the predetermined temperature, the relational expression between the rate of air utilization (Ua) and amount of current (I) of the cell stack 1 may be optimally changed, and additionally, if the temperature inside the exterior case 39 is lower than the predetermined temperature, the relational expression between the rate of air utilization (Ua) and amount of current (I) of the cell stack 1 may be also optimally changed.

Such an operation to change the rate of air utilization (Ua) in the cell stack 1 with respect to the quantity of generated electric power of the cell stack 1 adjusted by the supplying-power conditioning unit 9 based on this temperature inside the exterior case 39 measured by the thermal sensor 22 is useful, particularly when the fuel cell device is conducting the rated operation; therefore, it is preferable to at least conduct during the rated operation.

If the temperature inside the exterior case 39 is high while the fuel cell device is conducting the rated operation, there is a concern of a decline in the durability of the cell stack 1. In contrast, if the temperature inside the exterior case 39 is low, there is a concern of the power generation efficiency of the cell stack 1 declining. Therefore, the durability and the power generation efficiency of the cell stack 1 may be improved and a fuel cell device with improved power generation efficiency and durability may be achieved by the control unit 10 by changing the rate of air utilization (Ua) in the cell stack 1 with respect to the quantity of generated electric power of the cell stack 1 adjusted by the supplying-power conditioning unit 9 based on the temperature inside the exterior case 39 by the thermal sensor 22 while the fuel cell device is conducting the rated operation.

As illustrated in Figure 5, the reduced temperature of the cell stack 1 may be efficiently controlled and a fuel cell device with improved power generation efficiency and fuel cell device may be achieved during even the partial load operation by allowing the control unit 10 to change the rate of air utilization (Ua) in the cell stack 1 with respect to the quantity of generated electric power of the cell stack 1 adjusted by the supplying-power conditioning unit 9 based on the temperature inside the exterior case 39 measured by the thermal sensor 22 in the case.

In the above embodiments, the temperature inside the external case was divided into 3 scenarios: a case in which the temperature inside the exterior case was 15 to 25°C; a case lower than 15°C; and a case higher than 25°C, and the relational expression between the rate of air utilization (Ua) and amount of current (I) of the cell stack 1 was changed. However, the temperature may be set to a predefined temperature and the temperature inside the exterior case may be divided into 4 or more, with the oxygen-containing gas supply unit controlled based on the relational expression corresponding to the respective temperatures. In such cases, the power generation efficiency and durability may be further improved.

### REFERENCE NUMERALS

- 1: cell stack
- 3: oxygen-containing gas supplying unit
- 9: supplying-power conditioning unit (power conditioner)
- 10: controller
- 22: thermal sensor
- 23: module-housing container
- 24: fuel cell
- 28: gas inlet
- 29: gas outlet
- 39: exterior case
- M: fuel cell module

## Claims

1. A fuel cell device, comprising:
a container (23);
a cell stack (1) stored inside the container (23), the cell stack (1) comprising a plurality of fuel cells (24) operable to generate electric power with fuel gas and oxygen-containing gas;
a gas supply unit (3) to supply oxygen-containing gas to the fuel cells (24);
a supplying-power conditioning unit (9) operable to adjust the quantity of generated electric power in the cell stack (1);
a thermal sensor (22) outside the container (23), configured to measure a measured temperature of the oxygen-containing gas supplied to the fuel cells (24); and
a control unit (10) configured to control the gas supply unit (3) and the supplying-power conditioning unit (9);
**characterized in that**
the control unit (10) is configured to control a relationship between a rate of air utilization (Ua) of the cell stack (1) and the amount of current (I) generated by the cell stack (1) such that:
during a rated operation, the rate of air utilization Ua is kept constant in response to the demands from the external load even if the amount of current (I) varies;
during a partial load operation the rate of air utilization (Ua) is changed depending on the amount of current (I) of the cell stack (1) in response to the required load; and
the control unit (10) is configured to control so as to increase an amount of oxygen-containing gas supplied from the gas supply unit (3) if the temperature of the oxygen-containing gas measured by the thermal sensor (22) is higher than a predetermined temperature.

2. The fuel cell device according to claim 1, wherein the control unit (10) further controls the gas supply unit (3) to reduce the amount of oxygen-containing gas if the measured temperature is lower than the predetermined temperature.

3. The fuel cell device according to claim 1 or 2, wherein the control unit (10) is configured to store a plurality of relational expressions between an amount of current and a ratio of oxygen utilization; is configured to select one of the stored relational expressions corresponding to the measured temperature; and is configured to control the amount of oxygen-containing gas based on the selected expression.

4. The fuel cell device according to any one of claims 1 to 3, further comprising an exterior case (39) encompassing the container (23), the gas supply unit (3), the supplying-power conditioning unit (9), and the control unit (10).

5. The fuel cell device according to claim 4, wherein the thermal sensor (22) is located outside the exterior case (39).

6. The fuel cell device according to claim 4, wherein the thermal sensor (22) is located inside the exterior case (39).

7. The fuel cell device according to any one of claims 1 to 6, wherein the gas supply unit (3) comprises:
a gas inlet (28) for receiving oxygen-containing gas therein; and
a gas outlet (29) for supplying the oxygen-containing gas that was received in the gas inlet to the fuel cell; wherein the thermal sensor (22) is located at the gas inlet (28) or the gas outlet (29).

8. A method of operating a fuel cell device comprising a cell stack (1) including a plurality of fuel cells (24) arranged therein in a partial load operation, the method comprising:
supplying a fuel gas to the fuel cells (24);
supplying an oxygen-containing gas to the fuel cells (24);
measuring a gas temperature of the oxygen-containing gas at a location outside a container (23) in which the fuel cell stack (1) is located; and
generating an electrical current at the fuel cell stack (1) with a reaction of the fuel gas and the oxygen-containing gas;
**characterized by** controlling by a control unit (10) a relationship between a rate of air utilization (Ua) of the cell stack (1) and the amount of current (I) generated by the cell stack (1) such that:
during a rated operation, the rate of air utilization Ua is kept constant in response to the demands from the external load even if the amount of current (I) varies;
during a partial load operation the rate of air utilization (Ua) is changed depending on the amount of current (I) of the cell stack (1) in response to the required load; and
controlling by the control unit (10) such that increase an amount of oxygen-containing gas supplied from the gas supply unit (3) if the temperature of the oxygen-containing gas measured by the thermal sensor (22) is higher than a predetermined temperature.

9. The method according to claim 8, further comprising reducing by the control unit (10) the amount of the oxygen-containing gas if the gas temperature is lower than the predefined temperature.

10. The method according to claim 8, further comprising:
storing by the control unit (10) a plurality of relational expressions between an amount of current and a ratio of oxygen utilization in correspondence with a temperature range;
selecting by the control unit (10) a selected relational expression from the plurality of stored relational expressions corresponding to the measured temperature by the thermal sensor (22); and
controlling by the control unit (10) the amount of the oxygen-containing gas based on the selected relational expression.

11. The method according to claim 8, in which the fuel cell device comprises a gas supply unit (3) to supply oxygen-containing gas to the fuel cells and a supplying-power conditioning unit (9) operable to adjust the quantity of generated power in the fuel cell stack,the method further comprising monitoring the gas temperature at a location outside an exterior case (39) in which the container (23), the gas supply unit (3), the supplying-power conditioning unit and the control unit (10) are located.

12. The method according to claim 8, in which the fuel cell device comprises a gas supply unit (3) to supply oxygen-containing gas to the fuel cells and a supplying-power conditioning unit (9) operable to adjust the quantity of generated power in the fuel cell stack,the method further comprising measuring the gas temperature at a location inside an exterior case (39) in which the container (23), the gas supply unit (3), the supplying-power conditioning unit and the control unit (10) are located.

13. The method according to claim 12, further comprising measuring the gas temperature at a gas inlet (28) or a gas outlet (29) of a gas supply unit (3) supplying oxygen containing gas.

## Patentansprüche

1. Eine Brennstoffzellenvorrichtung, aufweisend:
einen Behälter (23),
einen Zellenstapel (1), der innerhalb des Behälters (23) aufgenommen ist, wobei der Zellenstapel (1) eine Mehrzahl von Brennstoffzellen (24) aufweist, die betreibbar sind, um mit Brenngas und sauerstoffhaltigem Gas elektrische Energie zu erzeugen,
eine Gas-Zuführ-Einheit (3), um den Brennstoffzellen (24) sauerstoffhaltiges Gas zuzuführen,
eine Zuführ-Energie-Konditionier-Einheit (9), die betreibbar ist, um die Menge an erzeugter elektrischer Energie in dem Zellenstapel (1) anzupassen,
einen Thermofühler (22) außerhalb des Behälters (23), der konfiguriert ist, um eine gemessene Temperatur des den Brennstoffzellen (24) zugeführten sauerstoffhaltigen Gases zu messen, und
eine Steuereinheit (10), die konfiguriert ist, um die Gas-Zuführ-Einheit (3) und die Zuführ-Energie-Konditionier-Einheit (9) zu steuern,
**dadurch gekennzeichnet, dass**
die Steuereinheit (10) konfiguriert ist, um eine Beziehung zwischen einer Luft-Nutzungs-Rate / Quote (Ua) des Zellenstapels (1) und der Menge an Strom (I) zu steuern, der von dem Zellenstapel (1) erzeugt wird, so dass:
die Luft-Nutzungs-Rate / Quote Ua während eines Nennbetriebs in Antwort auf die Anforderungen von der externen Last konstant gehalten wird, selbst wenn die Menge an Strom (I) variiert,
die Luft-Nutzungs-Rate / Quote (Ua) während eines Teillastbetriebs in Abhängigkeit von der Menge an Strom (I) des Zellenstapels (1) in Antwort auf die benötigte Last geändert wird, und
die Steuereinheit (10) zum Steuern konfiguriert ist, um eine Menge an sauerstoffhaltigem Gas zu erhöhen, das von der Gas-Zuführ-Einheit (3) zugeführt wird, wenn die Temperatur des sauerstoffhaltigen Gases, die von dem Thermofühler (22) gemessen wird, höher als eine vorbestimmte Temperatur ist.

2. Die Brennstoffzellenvorrichtung gemäß Anspruch 1, wobei die Steuereinheit (10) ferner die Gas-Zuführ-Einheit (3) steuert, um die Menge an sauerstoffhaltigem Gas zu reduzieren, wenn die gemessene Temperatur niedriger als die vorbestimmte Temperatur ist.

3. Die Brennstoffzellenvorrichtung gemäß Anspruch 1 oder 2, wobei die Steuereinheit (10) konfiguriert ist, um eine Mehrzahl von Beziehungsausdrücken zwischen einer Menge an Strom und einem Sauerstoff-Nutzungs-Verhältnis zu speichern, konfiguriert ist, um einen der gespeicherten Beziehungsausdrücke entsprechend der gemessenen Temperatur auszuwählen, und konfiguriert ist, um die Menge an sauerstoffhaltigem Gas basierend auf dem ausgewählten Ausdruck zu steuern.

4. Die Brennstoffzellenvorrichtung gemäß irgendeinem der Ansprüche 1 bis 3, ferner aufweisend ein äußeres Gehäuse (39), das den Behälter (23), die Gas-Zuführ-Einheit (3), die Zuführ-Energie-Konditionier-Einheit (9) und die Steuereinheit (10) umgibt.

5. Die Brennstoffzellenvorrichtung gemäß Anspruch 4, wobei der Thermofühler (22) außerhalb des äußeren Gehäuses (39) angeordnet ist.

6. Die Brennstoffzellenvorrichtung gemäß Anspruch 4, wobei der Thermofühler (22) innerhalb des äußeren Gehäuses (39) angeordnet ist.

7. Die Brennstoffzellenvorrichtung gemäß irgendeinem der Ansprüche 1 bis 6, wobei die Gas-Zuführ-Einheit (3) aufweist:
einen Gas-Einlass (28) zum darin Aufnehmen von sauerstoffhaltigem Gas, und
einen Gas-Auslass (29) zum Zuführen des sauerstoffhaltigen Gases, welches in dem Gas-Einlass aufgenommen wurde, an die Brennstoffzelle, wobei der Thermofühler (22) an dem Gas-Einlass (28) oder dem Gas-Auslass (29) angeordnet ist.

8. Ein Verfahren zum Betreiben einer Brennstoffzellenvorrichtung, die einen Zellenstapel (1) aufweist, der eine Mehrzahl von Brennstoffzellen (24) aufweist, die darin angeordnet sind, in einem Teillastbetrieb, wobei das Verfahren aufweist:
Zuführen eines Brenngases an die Brennstoffzellen (24),
Zuführen eines sauerstoffhaltigen Gases an die Brennstoffzellen (24),
Messen einer Gastemperatur des sauerstoffhaltigen Gases an einer Stelle außerhalb eines Behälters (23), in dem der Zellenstapel (1) angeordnet ist,
und Erzeugen eines elektrischen Stromes an dem Brennstoffzellenstapel (1) mit einer Reaktion des Brenngases und des sauerstoffhaltigen Gases,
**gekennzeichnet durch** Steuern durch eine Steuereinheit (10) einer Beziehung zwischen einer Luft-Nutzungs-Rate / Quote (Ua) des Zellenstapels (1) und der Menge an Strom (I), der von dem Zellenstapel (1) erzeugt wird, so dass:
die Luft-Nutzungs-Rate / Quote Ua während eines Nennbetriebs in Antwort auf die Anforderungen der äußeren Last konstant gehalten wird, selbst wenn die Menge an Strom (I) variiert,
die Luft-Nutzungs-Rate / Quote (Ua) während eines Teillastbetriebs in Abhängigkeit von der Menge an Strom (I) des Zellenstapels (1) in Antwort auf die benötigte Last geändert wird, und
Steuern durch die Steuereinheit (10), so dass eine Menge an sauerstoffhaltigem Gas, welches von der Gas-Zuführ-Einheit (3) zugeführt wird, erhöht wird, wenn die Temperatur des sauerstoffhaltigen Gases, die von dem Thermofühler (22) gemessen wird, höher als eine vorbestimmte Temperatur ist.

9. Das Verfahren gemäß Anspruch 8, ferner aufweisend das Reduzieren der Menge an sauerstoffhaltigen Gas durch die Steuereinheit (10), wenn die Gastemperatur niedriger als die vordefinierte Temperatur ist.

10. Das Verfahren gemäß Anspruch 8, ferner aufweisend:
Speichern einer Mehrzahl von Beziehungsausdrücken zwischen einer Menge an Strom und einem Sauerstoff-Nutzungs-Verhältnis im Zusammenhang mit einem Temperaturbereich durch die Steuereinheit (10),
Auswählen eines ausgewählten Beziehungsausdrucks aus der Mehrzahl von gespeicherten Beziehungsausdrücken entsprechend der durch den Thermofühler (22) gemessenen Temperatur durch die Steuereinheit (10) und
Steuern der Menge des sauerstoffhaltigen Gases durch die Steuereinheit (10) basierend auf dem ausgewählten Beziehungsausdruck.

11. Das Verfahren gemäß Anspruch 8, wobei die Brennstoffzellenvorrichtung aufweist: eine Gas-Zuführ-Einheit (3), um den Brennstoffzellen sauerstoffhaltiges Gas zuzuführen, und eine Zuführ-Energie-Konditionier-Einheit (9), die betreibbar ist, um die Menge an erzeugter Energie in dem Brennstoffzellenstapel anzupassen, wobei das Verfahren ferner aufweist:
Überwachen der Gastemperatur an einer Stelle außerhalb eines äußeren Gehäuses (39), in welchem der Behälter (23), die Gas-Zuführ-Einheit (3), die Zuführ-Energie-Konditionier-Einheit und die Steuereinheit (10) angeordnet sind.

12. Das Verfahren gemäß Anspruch 8, wobei die Brennstoffzellenvorrichtung aufweist: eine Gas-Zuführ-Einheit (3), um den Brennstoffzellen sauerstoffhaltiges Gas zuzuführen, und eine Zuführ-Energie-Konditionier-Einheit (9), die betreibbar ist, um die Menge an erzeugter Energie in dem Brennstoffzellenstapel anzupassen, wobei das Verfahren ferner aufweist:
Messen der Gastemperatur an einer Stelle innerhalb eines äußeren Gehäuses (39), in welchem der Behälter (23), die Gas-Zuführ-Einheit (3), die Zuführ-Energie-Konditionier-Einheit und die Steuereinheit (10) angeordnet sind.

13. Das Verfahren gemäß Anspruch 12, ferner aufweisend das Messen der Gastemperatur an einem Gas-Einlass (28) oder einem Gas-Auslass (29) einer Gas-Zuführ-Einheit (3), die sauerstoffhaltiges Gas zuführt.

## Revendications

1. Un dispositif de pile à combustible, comportant :
un récipient (23),
une pile de cellules (1) accueillie à l'intérieur du récipient (23), la pile de cellules (1) comportant une pluralité de piles à combustible (24) fonctionnant pour générer de l'énergie électrique avec du gaz combustible et du gaz contenant de l'oxygène,
une unité d'alimentation en gaz (3) pour fournir du gaz contenant de l'oxygène aux piles à combustible (24),
une unité de conditionnement d'énergie d'alimentation (9) fonctionnant pour adapter la quantité d'énergie électrique générée dans la pile de cellules (1),
un capteur thermique (22) à l'extérieur du récipient (23), configuré pour mesurer une température mesurée du gaz contenant de l'oxygène fourni aux piles à combustible (24), et
une unité de contrôle (10) configurée pour contrôler l'unité d'alimentation en gaz (3) et l'unité de conditionnement d'énergie d'alimentation (9),
**caractérisé en ce que**
l'unité de contrôle (10) est configurée pour contrôler une relation entre un taux d'utilisation d'air (Ua) de la pile de cellules (1) et la quantité de courant (I) généré par la pile de cellules (1), de sorte que :
pendant une opération nominale, le taux d'utilisation d'air Ua est maintenu constant en réponse aux demandes de la charge extérieure, même si la quantité de courant (I) varie ;
pendant un mode de fonctionnement en charge partielle, le taux d'utilisation d'air (Ua) est changé en fonction de la quantité de courant (I) de la pile de cellules (1) en réponse à la charge requise ; et
l'unité de contrôle (10) est configurée pour contrôler de façon à augmenter une quantité de gaz contenant de l'oxygène fourni de l'unité d'alimentation en gaz (3) si la température du gaz contenant de l'oxygène mesurée par le capteur thermique (22) est supérieure à une température prédéterminée.

2. Le dispositif de pile à combustible selon la revendication 1, dans lequel l'unité de contrôle (10) contrôle en outre l'unité d'alimentation en gaz (3) pour réduire la quantité de gaz contenant de l'oxygène si la température mesurée est inférieure à une température prédéterminée.

3. Le dispositif de pile à combustible selon la revendication 1 ou 2, dans lequel l'unité de contrôle (10) est configurée pour enregistrer une pluralité d'expressions relationnelles entre une quantité de courant et un taux d'utilisation d'oxygène ; est configurée pour choisir une parmi les expressions relationnelles enregistrées correspondant à la température mesurée ; et est configurée pour contrôler la quantité de gaz contenant de l'oxygène sur la base de l'expression choisie.

4. Le dispositif de pile à combustible selon l'une quelconque des revendications 1 à 3, comportant en outre un boîtier extérieur (39) entourant le récipient (23), l'unité d'alimentation en gaz (3), l'unité de conditionnement d'énergie d'alimentation (9) et l'unité de contrôle (10).

5. Le dispositif de pile à combustible selon la revendication 4, dans lequel le capteur thermique (22) est positionné à l'extérieur du boîtier extérieur (39).

6. Le dispositif de pile à combustible selon la revendication 4, dans lequel le capteur thermique (22) est positionné à l'intérieur de boîtier extérieur (39).

7. Le dispositif de pile à combustible selon l'une quelconque des revendications 1 à 6, dans lequel l'unité d'alimentation en gaz (3) comporte :
une entrée de gaz (28) pour recevoir du gaz contenant de l'oxygène à l'intérieur de celle-ci,
une sortie de gaz (29) pour fournir le gaz contenant de l'oxygène qui a été reçu dans l'entrée de gaz à la pile à combustible, le capteur thermique (22) étant situé à l'entrée de gaz (28) ou à la sortie de gaz (29).

8. Un procédé pour actionner un dispositif de pile à combustible comportant une pile de cellules (1) comprenant une pluralité de piles à combustible (24) agencées dans celle-ci en un mode de fonctionnement en charge partielle, le procédé comportant les étapes consistant à :
fournir un gaz combustible aux piles à combustible (24),
fournir un gaz contenant de l'oxygène aux piles à combustible (24),
mesurer une température de gaz du gaz contenant de l'oxygène à un endroit à l'extérieur d'un récipient (23) dans lequel l'empilement de piles à combustible (1) est situé,
et générer un courant électrique au niveau de l'empilement de piles à combustible (1) avec une réaction du gaz combustible et du gaz contenant de l'oxygène,
**caractérisé par** le contrôle, par une unité de contrôle (10), d'une relation entre un taux d'utilisation d'air (Ua) de la pile de cellules (1) et la quantité de courant (I) généré par la pile de cellules (1), de sorte que :
pendant une opération nominale, le taux d'utilisation d'air Ua est maintenu constant en réponse aux demandes de la charge extérieure, même si la quantité de courant (I) varie ;
pendant un mode de fonctionnement en charge partielle, le taux d'utilisation d'air (Ua) est changé en fonction de la quantité de courant (I) de la pile de cellules (1) en réponse à la charge requise ; et
par le contrôle par l'unité de contrôle (10) de façon à augmenter une quantité de gaz contenant de l'oxygène fourni de l'unité d'alimentation en gaz (3) si la température du gaz contenant de l'oxygène mesurée par le capteur thermique (22) est supérieure à une température prédéterminée.

9. Le procédé selon la revendication 8, comportant en outre l'étape de réduire, par l'unité de contrôle (10), la quantité du gaz contenant de l'oxygène si la température de gaz est inférieure à la température prédéterminée.

10. Le procédé selon la revendication 8, comportant en outre les étapes consistant à :
enregistrer une pluralité d'expressions relationnelles entre une quantité de courant et un taux d'utilisation d'oxygène correspondant à une plage de température par l'unité de contrôle (10),
choisir, par l'unité de contrôle (10), une expression relationnelle choisie parmi la pluralité d'expressions relationnelles correspondant à la température mesurée par le capteur thermique (22), et
contrôler, par l'unité de contrôle (10), la quantité du gaz contenant de l'oxygène sur la base de l'expression relationnelle choisie.

11. Le procédé selon la revendication 8, dans lequel le dispositif de pile à combustible comporte une unité d'alimentation en gaz (3) pour fournir du gaz contenant de l'oxygène aux piles à combustible et une unité de conditionnement d'énergie d'alimentation (9) fonctionnant pour adapter la quantité d'énergie générée dans l'empilement de piles à combustible, le procédé comportant en outre l'étape consistant à :
surveiller la température de gaz à un endroit à l'extérieur d'un boîtier extérieur (39) dans lequel le récipient (23), l'unité d'alimentation en gaz (3), l'unité de conditionnement d'énergie d'alimentation et l'unité de contrôle sont situés.

12. Le procédé selon la revendication 8, dans lequel le dispositif de pile à combustible comporte une unité d'alimentation en gaz (3) pour fournir du gaz contenant de l'oxygène aux piles à combustible et une unité de conditionnement d'énergie d'alimentation (9) fonctionnant pour adapter la quantité d'énergie générée dans l'empilement de piles à combustible, le procédé comportant en outre l'étape consistant à :
mesurer la température de gaz à un endroit à l'intérieur d'un boîtier extérieur (39) dans lequel le récipient (23), l'unité d'alimentation en gaz (3), l'unité de conditionnement d'énergie d'alimentation et l'unité de contrôle (10) sont situés.

13. Le procédé selon la revendication 12, comportant en outre l'étape consistant à mesurer la température de gaz au niveau d'une entrée de gaz (28) ou d'une sortie de gaz (29) d'une unité d'alimentation en gaz (3) qui fournit du gaz contenant de l'oxygène.
